# EUROPÄISCHE PATENTSCHRIFT

(11) **EP 4 079 675 B1**
(45) Veröffentlichungstag und Bekanntmachung des Hinweises auf die Patenterteilung: **30.07.2025**
(21) Anmeldenummer: 22168470.7
(22) Anmeldetag: 14.04.2022
(51) Int. Cl.: B66F 9/06

(54) **HANDHABUNGSVORRICHTUNG MIT DEFINIERTER RUHEKONFIGURATION**
HANDLING DEVICE WITH DEFINED REST CONFIGURATION
DISPOSITIF DE MANUTENTION À CONFIGURATION DE REPOS DÉFINIE

(30) Priorität: 20.04.2021 DE 102021109904
(43) Veröffentlichungstag der Anmeldung: 26.10.2022
(73) Patentinhaber: J. Schmalz GmbH, 72293 Glatten (DE)
(72) Erfinder: Thielicke, Ernst, 72770 Reutlingen (DE); Beck, Steffen, 72227 Egenhausen (DE); Kohler, Jonathan, 72296 Schopfloch (DE); Burt, Hans, 72160 Horb a.N. (DE); Katz, Sandro, 72108 Rottenburg (DE)
(74) Vertreter: DREISS Patentanwälte PartG mbB

(56) Entgegenhaltungen:
- EP-A2- 0 189 356
- DE-U1- 29 508 758
- US-A1- 2018 043 529
- US-A1- 2018 086 489
- US-A1- 2018 182 658
- US-A1- 2018 354 136

## Beschreibung

Die Erfindung betrifft eine Handhabungsvorrichtung zum Handhaben und ggf. Transportieren von Objekten.

In Produktions- oder Logistikumgebungen gibt es oftmals eine Vielzahl von Handhabungsstationen, an denen Objekte z.B. aus einem Lagerregal auf eine Palette bewegt werden müssen. Zum Bewegen der Objekte können handgeführte Handhabungsvorrichtungen zum Einsatz kommen, die eine hohe Flexibilität beim Verladen ermöglichen. Als Hebehilfen können Schlauchheber mit endständig an einem Hubschlauch angeordneten Sauggreifern zum Einsatz kommen. Auch kranartige Konstruktionen sind bekannt. Aus der EP289042A1 z.B. ist eine stationäre Hebehilfe bekannt, wobei ein Tragseil an einem horizontal ausgerichteten, seitlich verschwenkbaren Ausleger entlanggeführt wird. Am Tragseil kann ein Vakuumgreifer zum Befestigen der Objekte an der Vorrichtung angeordnet sein. Der Bediener kann die Objekte nach dem Aufnehmen von Hand betätigen, um sie an ihre Bestimmungsstelle zu verlagern und dort abzusetzen. Zum Bewegen von Objekten über weitere Distanzen kommen oftmals Flurförderfahrzeuge zum Einsatz, z.B. Gabelstapler. Wenn die Objekte vom Flurförderfahrzeug in Lagerbereiche oder auf Handhabungsstationen verladen werden, können Probleme aufgrund des Platzbedarfs der verwendeten Handhabungsvorrichtung oder einer ungünstigen Positionierung der Handhabungsvorrichtung auftreten. Insbesondere kann es zu erheblichem Rangieraufwand kommen, wenn die Handhabungsvorrichtung ortsfest angeordnet ist.

Aus der US 2018/182658 A1, der US 2018/086489 A1, der US 2018/043529 A1, der US 2018/354136 A1, der DE 295 08 758 U1 und der EP 0 189 356 A2 sind Handhabungsvorrichtungen bekannt, mit einer vertikal verlaufenden Stütze und mit einem an dieser Stütze drehbar und/oder verschiebbar angeordneten horizontal verlaufendem Arm.

Der vorliegenden Erfindung liegt die Aufgabe zugrunde, eine Handhabungsvorrichtung bereitzustellen, welche komfortabel bedient werden kann und einfach und sicher zwischen verschiedenen Orten bewegt werden kann.

Die Aufgabe wird mit einer Handhabungsvorrichtung mit den Merkmalen des Anspruchs 1 gelöst. Die Handhabungsvorrichtung umfasst eine sich bei bestimmungsgemäßen Betrieb der Handhabungsvorrichtung entlang einer senkrechten Stützachse erstreckende Abstützung. An der Abstützung ist ein dreh- und verschiebefest, sich in einer ersten Auskragebene quer zur Abstützung entlang einer ersten Auskragrichtung erstreckendes, erstes Auskragglied angeordnet. Die Auskragebene ist vorzugsweise orthogonal in einem Winkel von 90° zur Abstützung angeordnet. Das erste Auskragglied kann insbesondere einen ersten Endabschnitt aufweisen, welcher mit der Abstützung verschraubt, verschweißt oder in sonstiger Weise verbunden ist. Das erste Auskragglied ist vorzugsweise nicht längenverstellbar und/oder nicht teleskopierbar. Insbesondere ist das erste Auskragglied starr mit der Abstützung verbunden.

An dem ersten Auskragglied ist mittels eines ersten Gelenks ein zweites Auskragglied in einer zweiten Auskragebene schwenkbar gelagert. Das erste Gelenk ist vorzugsweise als erstes Drehgelenk mit einem einzigen Freiheitsgrad ausgebildet, wobei es um eine parallel zur Stützachse verlaufende erste Drehachse drehbar ist. Das erste Gelenk kann Kugel- oder Zylinderrollenlager umfassen. Das erste Gelenk und das zweite Auskragglied ist insbesondere an einem zweiten Endabschnitt des ersten Auskragglieds angeordnet. Der zweite Endabschnitt ist dem oben genannten, ersten Endabschnitt des ersten Auskragglieds entgegengesetzt angeordnet. Das zweite Auskragglied kann ebenfalls einen ersten Endabschnitt und einen zweiten Endabschnitt aufweisen, wobei der erste Endabschnitt des zweiten Auskragglieds dem zweiten Endabschnitt des ersten Auskragglieds zugeordnet ist.

An dem zweiten Auskragglied ist mittels eines zweiten Gelenks ein drittes Auskragglied in einer dritten Auskragebene schwenkbar gelagert. Das zweite Gelenk ist vorzugsweise als Drehgelenk mit einem einzigen Freiheitsgrad ausgebildet, wobei es um eine parallel zur Stützachse verlaufende zweite Drehachse drehbar ist. Das zweite Gelenk kann vorzugsweise Kugel- oder Zylinderrollenlager umfassen. Das zweite Gelenk und/oder das dritte Auskragglied ist insbesondere an einem zweiten Endabschnitt des zweiten Auskragglieds angeordnet. Der zweite Endabschnitt ist dem ersten Endabschnitt des zweiten Auskragglieds entgegengesetzt angeordnet. Das dritte Auskragglied kann einen ersten Endabschnitt und einen zweiten Endabschnitt aufweisen, wobei der erste Endabschnitt des dritten Auskragglieds dem zweiten Endabschnitt des zweiten Auskragglieds zugeordnet ist.

An dem dritten Auskragglied ist ein Anschlussabschnitt zur Ankopplung einer Hebe- und/oder Greifvorrichtung vorgesehen. Der Anschlussabschnitt ist vorzugsweise dem ersten Endabschnitt des dritten Auskragglieds entgegengesetzt angeordnet.

Das erste Gelenk und das zweite Gelenk sind derart ausgebildet, dass entlang der Stützachse die erste Auskragebene über der zweiten Auskragebene liegt und die zweite Auskragebene über der dritten Auskragebene liegt. Das erste Auskragglied, das zweite Auskragglied und das dritte Auskragglied sind demnach kaskadenartig bzw. absteigend stufenförmig angeordnet. Zudem sind die Auskragglieder und/oder die Gelenke derart ausgebildet, dass die erste Auskragebene, die zweite Auskragebene und/oder die dritte Auskragebene jeweils parallel zueinander sind und/oder dass die erste Auskragebene, die zweite Auskragebene und/oder die dritte Auskragebene jeweils orthogonal zur Stützachse verlaufen.

Die Gelenke und die Auskragglieder sind derart ausgebildet, dass das zweite Auskragglied unter dem ersten Auskragglied durchschwenkbar ist, und dass das dritte Auskragglied unter dem zweiten Auskragglied und unter dem ersten Auskragglied durchschwenkbar ist. Vorzugsweise ist das erste Gelenke derart ausgebildet, dass das zweite Auskragglied beliebig um mehr als 360° um die erste Drehachse verschwenkbar ist. Vorzugsweise ist das zweite Gelenke derart ausgebildet, dass das dritte Auskragglied beliebig um mehr als 360° um die zweite Drehachse verschwenkbar ist. Durch die Verschwenkung der Auskragglieder wird eine hohe Bewegungsfreiheit für eine angekoppelte Hebe- und/oder Greifvorrichtung ermöglicht. In einer Ebene parallel zur dritten Auskragebene kann die Hebe- und/oder Greifvorrichtung insofern nahezu beliebig bewegt werden. Aufgrund der starren Befestigung des ersten Auskragglieds an der Abstützung wird eine einfache Bedienbarkeit der Handhabungsvorrichtung erzielt, da der Bewegungsbereich der Auskragglieder entlang der Auskragrichtung verlagert und/oder beschränkt ist.

An der Abstützung und/oder an dem ersten Auskragglied ist vorzugsweise eine Verriegelungseinrichtung vorgesehen, in welcher das dritte Auskragglied in einer Ruhekonfiguration fixierbar sind. Das dritte Auskragglied weist vorzugsweise einen Verriegelungsabschnitt auf, welcher der Verriegelungseinrichtung zugeordnet ist. Die Verriegelungseinrichtung und der Verriegelungsabschnitt sind vorzugsweise derart aufeinander abgestimmt ausgebildet und derart angeordnet, dass der Verriegelungsabschnitt in der Verriegelungseinrichtung festsetzbar ist und dadurch die eindeutig definierte Ruhekonfiguration für das zweite Auskragglied und das dritte Auskragglied vorgegeben ist.

Bei mobilen Handhabungsvorrichtungen mit beweglichen Gliedern ist beim Bewegen der gesamten Handhabungsvorrichtung darauf zu achten, dass die Glieder nicht zu weit zur Seite ausladen oder gar zur Seite ausschlagen. Durch die dreh- und verschiebefeste Anordnung des ersten Auskragglieds und durch die Möglichkeit zum Festsetzen des zweiten Auskragglieds und des dritten Auskragglieds mittels der Verriegelungseinrichtung und dem Verriegelungsabschnitt wird eine kompakte Ruhekonfiguration ermöglicht, wie unten noch näher erläutert.

Eine vorteilhafte Weiterbildung der Erfindung sieht vor, dass der Anschlussabschnitt und/oder der Verriegelungsabschnitt an dem zweiten Endabschnitt des dritten Auskragglieds angeordnet ist, wobei der zweite Endabschnitt des dritten Auskragglieds dem zweiten Gelenk abgewandt ist. Wenn der Anschlussabschnitt und der Verriegelungsabschnitt am zweiten Endabschnitt des dritten Auskragglieds angeordnet sind, wird in der Ruhekonfiguration eine gleichbleibende Stelle zum Koppeln der Hebe- und/oder Greifvorrichtung im Bereich der Verriegelungseinrichtung bereitgestellt.

Vorteilhafterweise weist das erste Auskragglied eine erste Länge, das zweite Auskragglied eine zweite Länge und das dritte Auskragglied eine dritte Länge auf. Die erste Länge entspricht entlang der Auskragrichtung dem Abstand zwischen der Abstützung und dem ersten Gelenk. Die zweite Länge entspricht dem Abstand zwischen dem ersten Gelenk und dem zweiten Gelenk. Die dritte Länge entspricht dem Abstand zwischen dem zweiten Gelenk und dem Anschlussabschnitt. Es ist vorteilhaft, wenn die Summe der zweiten Länge des zweiten Auskragglieds und der dritten Länge des dritten Auskragglieds größer ist, als die erste Länge des ersten Auskragglieds. In der Ruhekonfiguration liegt vorzugsweise das zweite Gelenk lateral neben dem ersten Auskragglied. Es ist denkbar, dass in der Ruhekonfiguration das zweite Gelenk lateral neben dem ersten Auskragglied und entlang der Auskragrichtung hinter dem ersten Gelenk liegt.

In der Ruhekonfiguration liegt das zweite Gelenk entlang der Erstreckungsrichtung des ersten Auskragglieds betrachtet zwischen der Abstützung und dem ersten Gelenk, aber orthogonal zur Auskragrichtung neben dem ersten Auskragglied versetzt. Dadurch kann ein Ausleger mit großer Länge und Spannweite realisiert werden, der in seiner Ruhekonfiguration nur wenig Platz in lateraler Richtung beansprucht. Vorzugsweise schließen in der Ruhekonfiguration das zweite Auskragglied und das dritte Auskragglied an dem zweiten Gelenk einen Winkel zwischen 30° und 180°, bevorzugt einen stumpfen Winkel, miteinander ein.

Es ist vorteilhaft, wenn die erste Länge des ersten Auskragglieds jeweils länger als die zweite Länge des zweiten Auskragglieds und/oder länger als die dritte Länge des dritten Auskragglieds ist. Zudem ist es vorteilhaft, wenn die dritte Länge des dritten Auskragglieds länger als die zweite Länge des zweiten Auskragglieds ist. Die kürzere Ausbildung der beweglichen Auskragglieder gewährleistet eine leichtgängige Handhabung der Handhabungsvorrichtung durch den Bediener.

Bei einer vorteilhaften Weiterbildung ist der Anschlussabschnitt und/oder der Verriegelungsabschnitt des dritten Auskragglieds entlang der Stützachse nach oben versetzt. Vorzugsweise liegt der Anschlussabschnitt und/oder der Verriegelungsabschnitt in der zweiten Auskragebene oder oberhalb der zweiten Auskragebene, also auf der der dritten Auskragebene gegenüberliegenden Seite der zweiten Auskragebene. Demnach kann eine Hebe- und/oder Greifvorrichtung an dem Anschlussabschnitt möglichst weit oben angeordnet werden ohne, dass der Bauraum der gesamten Handhabungsvorrichtung erhöht werden muss. Sollte z.B. ein Schlauchheber mit großer Hublänge an dem Anschlussabschnitt angekoppelt werden, kann somit sichergestellt werden, dass das Greiforgan mit einer Mindestlänge in der zusammengezogenen Konfiguration des Schlauchhebers nicht zu tief hängt. In diesem Zusammenhang ist es vorteilhaft, wenn ein Abstand entlang des dritten Auskragglieds zwischen dem zweiten Gelenk und dem Anschlussabschnitt und/oder dem Verriegelungsabschnitt größer oder gleich der zweiten Länge des zweiten Auskragglieds ist. Somit ist es möglich, dass das dritte Auskragglied vollständig unter das zweite Auskragglied durchgeschwenkt werden kann, auch wenn der Anschlussabschnitt und/oder der Verriegelungsabschnitt des dritten Auskragglieds entlang der Stützachse nach oben versetzt ist.

Die Abstützung ist als sich entlang der Stützachse erstreckende Säule ausgebildet, welche insbesondere höhenverstellbar und weiter insbesondere teleskopierbar ist. Folglich ist eine anzukoppelnde Hebe- und/oder Greifvorrichtung in allen drei Raumrichtungen X, Y, und Z beweglich. Dies stellt eine hohe Flexibilität beim Handhaben durch den Bediener dar.

Eine Weiterbildung der Erfindung sieht vor, dass die Handhabungsvorrichtung ein Basisgehäuse mit einer parallel zur Auskragrichtung verlaufenden Mittellängsachse und mit einer orthogonal zur Mittellängsachse und parallel zur ersten Auskragebene verlaufenden Querachse umfasst. Die Abstützung ist vorzugsweise außermittig bezüglich der Mittellängsachse an dem Basisgehäuse, insbesondere dreh-und/oder verschiebefest, angeordnet. Insofern ist die Abstützung zur Mittellängsachse entlang der Querachse beabstandet an dem Basisgehäuse angeordnet. Demnach kann die Handhabungsvorrichtung einfach durch ein Flurförderfahrzeug unterfahren und bewegt werden.

Es ist vorteilhaft, wenn die Verriegelungseinrichtung an einer der Mittellängsachse zugewandten Seite der Abstützung und/oder des ersten Auskragglieds angeordnet ist. Zudem ist es vorteilhaft, wenn sowohl die Verriegelungseinrichtung als auch der Verriegelungsabschnitt in der zweiten Auskragebene angeordnet sind. Folglich ist es für den Bediener naheliegend, das zweite Auskragglied und das dritte Auskragglied in der Ruhekonfiguration zwischen der Mittellängsachse und dem ersten Auskragglied anzuordnen.

Vorteilhafterweise ist die Verriegelungseinrichtung und/oder der Verriegelungsabschnitt derart eingerichtet, dass der Verriegelungsabschnitt entlang einer von der Mittellängsachse kommenden Bewegungsbahn in die Verriegelungseinrichtung festsetzbar ist. Insofern ist der seitliche Raumbedarf zum Verschwenken der Ausleger in die Ruhekonfiguration möglichst gering gehalten. Der Bediener kann das zweite Auskragglied und das dritte Auskragglied vorzugsweise nur von der Mittellängsachse kommend in die Ruhekonfiguration festsetzen. In der Ruheposition liegt das zweite Gelenk dann vorzugsweise lateral neben dem ersten Auskragglied, und zwar insbesondere auf der der Mittellängsachse zugewandten Seite des ersten Auskragglieds. Das erste Auskragglied und das zweite Auskragglied schließen an dem ersten Gelenk einen spitzen Winkel miteinander ein. Dadurch wird die Ruhekonfiguration eingenommen, ohne dass eine seitlich überstehende Störkontur gebildet wird. Es ist auch denkbar, dass das zweite Auskragglied und das dritte Auskragglied in Summe signifikant länger als das erste Auskragglied ausgebildet sind. In dem Fall kann das zweite Gelenk in der Ruhekonfiguration zwischen dem ersten Auskragglied und der Mittellängsachse liegen oder zwischen dem ersten Auskragglied und einer weiteren Längsachse, welche parallel und außermittig zur Mittellängsachse gegenüber der Abstützung verläuft. Auch hier ist sichergestellt, dass in der Ruhekonfiguration das zweite Auskragglied und das dritte Auskragglied keine seitlich überstehende Störkontur bildet.

Bei einer Weiterbildung der Erfindung weist das Basisgehäuse wenigstens eine Zinkenaufnahme für wenigstens eine Zinke einer Gabel eines Flurförderfahrzeugs auf, wobei die Zinkenaufnahme insbesondere in der Art eines Zinken-Überschuhs ausgebildet ist. Das Basisgehäuse und/oder die Zinkenaufnahme ist vorzugsweise derart ausgebildet, dass das Basisgehäuse mit dem Flurförderfahrzeug unterfahrbar ist und der wenigstens eine Zinken in die wenigstens eine Zinkenaufnahme einführbar ist. Dadurch ist ein einfacher Transport der Handhabungsvorrichtung mittels des Flurförderfahrzeugs möglich.

Im Basisgehäuse ist vorzugsweise eine Energiequelle vorgesehen, welche insbesondere als austauschbare und/oder wiederaufladbare Trogbatterie ausgebildet ist. Die Trogbatterie kann einfach in das Basisgehäuse eingeschoben werden oder aus dem Basisgehäuse entnommen werden.

Auch kann in dem Basisgehäuse eine Unterdruckpumpe angeordnet sein. Die Abstützung, das erste Auskragglied, das zweite Auskragglied und das dritte Auskragglied weisen vorzugsweise Kanäle, insbesondere innenliegende Kanäle, zur Förderung von Medien und/oder Daten zwischen der Unterdruckpumpe und dem Anschlussabschnitt auf. Ferner können die Abstützung, das erste Auskragglied, das zweite Auskragglied und das dritte Auskragglied als Hohlprofile ausgebildet sein, wobei die innenliegenden Hohlräume der Hohlprofile die genannten Kanäle bilden. Dadurch wird ein innenliegendes Druckführungssystem für eine ankoppelbare Hebe- und/oder Greifvorrichtung bereitgestellt und Störkonturen durch Schläuche vermieden.

In einer weiteren Weiterbildung der Erfindung ist am Basisgehäuse wenigstens ein Stützfuß vorgesehen, welcher parallel zur Stützachse in eine entlang der Stützachse untere Stützposition und in eine entlang der Stützachse obere Löseposition einstellbar ist. In der Stützposition kann die an der Handhabungsvorrichtung angreifende Last über den wenigstens einen Stützfuß in den Boden geleitet werden. In der oberen Löseposition kann die Handhabungsvorrichtung verfahren werden, ohne dass der wenigstens eine Stützfuß den Boden berührt.

Es ist vorteilhaft, wenn der wenigstens eine Stützfuß derart eingerichtet ist, dass der wenigstens eine Stützfuß in die obere Löseposition verfährt, wenn der Verriegelungsabschnitt in der Verriegelungseinrichtung festgesetzt wird und/oder wenn ein Flurförderfahrzeug die Handhabungsvorrichtung unterfahren hat. Es ist ferner vorteilhaft, wenn der wenigstens eine Stützfuß derart eingerichtet ist, dass der wenigstens eine Stützfuß in die untere Stützposition verfährt, wenn der Verriegelungsabschnitt aus der Verriegelungseinrichtung gelöst wird. Vorzugsweise ist eine Steuerungseinrichtung vorgesehen, welche dazu eingerichtet ist, die Stützposition in die obere Löseposition und die untere Stützposition zu verfahren. Demnach kann der wenigstens eine Stützfuß automatisiert in die jeweils optimale Position verfahren werden. Die Steuerungseinrichtung kann insbesondere im Basisgehäuse oder am Anschlussabschnitt angeordnet sein.

Vorteilhafterweise umfasst die Handhabungsvorrichtung eine Hebe- und/oder Greifvorrichtung, welche am Anschlussabschnitt des dritten Auskragglieds angeordnet ist. Die Hebe- und/oder Greifvorrichtung ist vorzugsweise als Schlauchheber ausgebildet, umfassend einen durch Beaufschlagung mit Unterdruck verkürzbaren Hebeschlauch sowie ein am freien Ende des Hebeschlauchs angeordnetes Sauggreifmittel zum Ansaugen eines zu hebenden Objekts. Die zum Betrieb erforderliche Unterdruckversorgung für den Hebeschlauch und das Sauggreifmittel erfolgt vorzugsweise durch innenliegende Kanäle in den Auskraggliedern und insbesondere auch durch innenliegende Kanäle in der Abstützung.

Weitere Einzelheiten und vorteilhafte Ausgestaltungen der Erfindung sind der nachfolgenden Beschreibung zu entnehmen, anhand derer verschiedene Ausführungsbeispiele näher beschrieben und erläutert sind.

Es zeigen:
- Fig. 1: eine schematische Ansicht einer erfindungsgemäßen Handhabungsvorrichtung mit drei Auskraggliedern;
- Fig. 2: eine schematische Draufsicht auf die Handhabungsvorrichtung gemäß Fig. 1;
- Fig. 3a: eine schematische Seitenansicht der Handhabungsvorrichtung gemäß Fig. 1;
- Fig. 3b: eine Detailansicht des Details III der Fig. 3a;
- Fig. 4: eine schematische Ansicht der erfindungsgemäßen Handhabungsvorrichtung gemäß Fig. 1 mit einem Basisgehäuse und mit einer Hebeeinrichtung, wobei die drei Auskragglieder vollständig ausgespannt sind;
- Fig. 5: eine schematische Ansicht der Handhabungsvorrichtung gemäß Fig. 4 mit den Auskraggliedern in der Ruhekonfiguration;
- Fig. 6: eine schematische Draufsicht auf die Handhabungsvorrichtung gemäß Fig. 4 mit den Auskraggliedern in der Ruhekonfiguration;
- Fig. 7: eine schematische Seitenansicht der Handhabungsvorrichtung gemäß Fig. 4 mit den Auskraggliedern in der Ruhekonfiguration; und
- Fig. 8: eine schematische Unteransicht des Basisgehäuses der Handhabungsvorrichtung gemäß Fig. 4 mit in der Löseposition stehenden Stützfüßen.

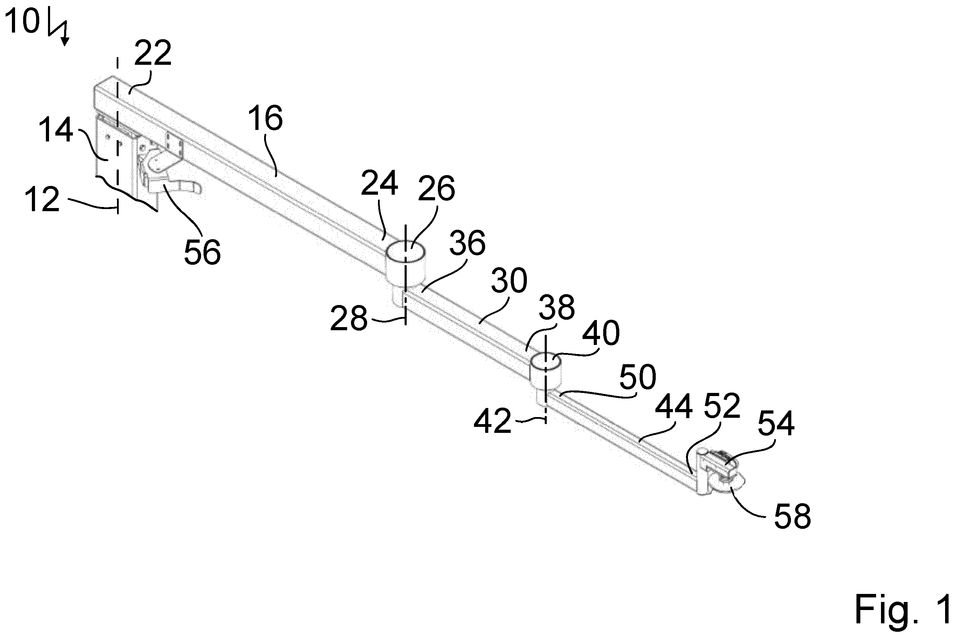

In den Fig. 1 bis 3 ist eine Handhabungsvorrichtung 10 gezeigt, welche eine sich entlang einer bei bestimmungsgemäßen Betrieb der Handhabungsvorrichtung 10 senkrechten Stützachse 12 erstreckende Abstützung 14 umfasst. Die Abstützung 14 ist als Säule 14 ausgebildet, welche teleskopierbar und insofern höhenverstellbar ist. An der Abstützung 14 ist ein erstes Auskragglied 16 angeordnet, welches dreh- und verschiebefest an der Abstützung 14 befestigt ist und welches sich in einer ersten Auskragebene 18 entlang einer ersten Auskragrichtung 20 erstreckt. Die erste Auskragebene 18 und die erste Auskragrichtung 20 verlaufen jeweils orthogonal, in einem Winkel von 90° zur Stützachse 12. Das erste Auskragglied 16 weist einen vorderen ersten Endabschnitt 22 und einen hinteren zweiten Endabschnitt 24 auf. Das erste Auskragglied 16 ist im vorderen ersten Endabschnitt 22 mit der Abstützung 14 verbunden.

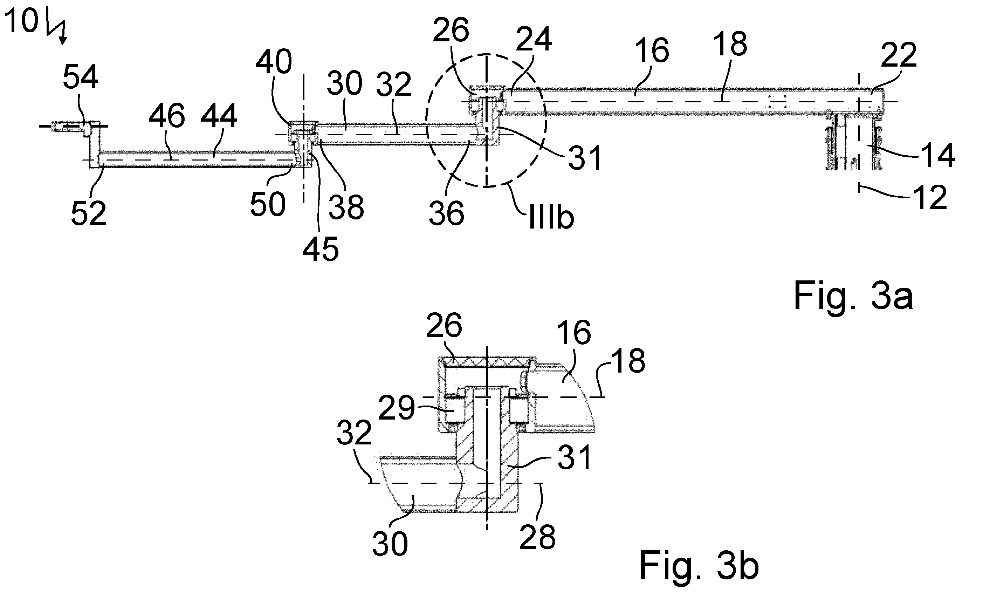

Am hinteren zweiten Endabschnitt 24 des ersten Auskragglieds 16 ist ein erstes Drehgelenk 26 angeordnet. Das Drehgelenk 26 ist um eine erste Drehachse 28 drehbar, wobei die Drehachse 28 parallel zur Stützachse 12 verläuft. Das erste Drehgelenk 28 umfasst Zylinderrollenlager 29. Das erste Drehgelenk 28 ist im Detail in Fig. 3a ersichtlich. Mittels des ersten Drehgelenks 26 ist ein zweites Auskragglied 30 an dem ersten Auskragglied 16 schwenkbar angeordnet.

Das zweite Auskragglied 30 ist um die Drehachse 28 verschwenkbar. Das zweite Auskragglied 30 erstreckt sich in einer zweiten Auskragebene 32 entlang einer zweiten Auskragrichtung 34. Das zweite Auskragglied 30 weist einen vorderen ersten Endabschnitt 36 und einen hinteren zweiten Endabschnitt 38 auf, wobei der erste Endabschnitt 36 dem ersten Drehgelenk 26 zugeordnet ist. Am ersten Endabschnitt 36 weist das zweite Auskragglied 30 einen entlang der ersten Drehachse 28 verlaufenden ersten Gelenksabschnitt 31 auf, welcher von unten in das erste Drehgelenk 26 führt und von den Zylinderrollenlagern 29 umschlossen wird.

Am zweiten Endabschnitt 38 des zweiten Auskragglieds 30 ist ein zweites Drehgelenk 40 mit einer zweiten Drehachse 42 angeordnet, wobei die zweite Drehachse 42 jeweils parallel zur Stützachse 12 und zur ersten Drehachse 28 verläuft. Das zweite Drehgelenk 40 umfasst ebenfalls Zylinderrollenlager 29.

An dem zweiten Auskragglied 30 ist mittels des zweiten Drehgelenks 40 ein drittes Auskragglied 44 schwenkbar angeordnet. Das dritte Auskragglied 44 ist um die zweite Drehachse 42 verschwenkbar. Das dritte Auskragglied 44 erstreckt sich in einer dritten Auskragebene 46 entlang einer dritten Auskragrichtung 48. Das dritte Auskragglied 44 weist ein vorderen ersten Endabschnitt 50 und einen hinteren zweiten Endabschnitt 52 auf, wobei der erste Endabschnitt 50 dem zweiten Drehgelenk 40 zugeordnet ist. Am ersten Endabschnitt 50 weist das dritte Auskragglied 44 einen entlang der zweiten Drehachse 42 verlaufenden zweiten Gelenksabschnitt 45 auf, welcher von unten in das zweite Drehgelenk 40 führt und von den Zylinderrollenlagern 29 umschlossen wird.

An dem hinteren zweiten Endabschnitt 52 des dritten Auskragglieds 44 ist ein Anschlussabschnitt 54 zur Ankopplung einer Hebe- und/oder Greifvorrichtung 55 vorgesehen.

Das erste Drehgelenk 26 ist derart ausgebildet, dass gemäß Fig. 3a entlang der Stützachse 12 die erste Auskragebene 18 über der zweiten Auskragebene 32 liegt. Das zweite Drehgelenk 40 ist derart ausgebildet, dass entlang der Stützachse 12 die zweite Auskragebene 32 über der dritten Auskragebene 46 liegt. Das erste Drehgelenk 26 und das zweite Drehgelenk 40 sind derart ausgebildet, dass die erste Auskragebene 18 über der dritten Auskragebene 46 liegt. Ferner sind die Drehgelenke 26, 40 und die Auskragglieder 16, 30, 44 derart ausgebildet, dass die erste Auskragebene 18, die zweite Auskragebene 32 und die dritte Auskragebene 46 jeweils parallel zueinander verlaufen.

Insbesondere in Fig. 3a ist ersichtlich, dass das zweite Auskragglied 30 unter dem ersten Auskragglied 16 durchschwenkbar ist. Entsprechend ist das dritte Auskragglied 44 unter dem zweiten Auskragglied 30 durchschwenkbar. Das erste Drehgelenk 26 und das zweite Drehgelenk 40 sind derart ausgebildet, dass das zweite Auskragglied 30 und das dritte Auskragglied 44 beliebig oft um mehr als 360° um die erste Drehachse 28 bzw. die zweite Drehachse 42 verschwenkbar sind.

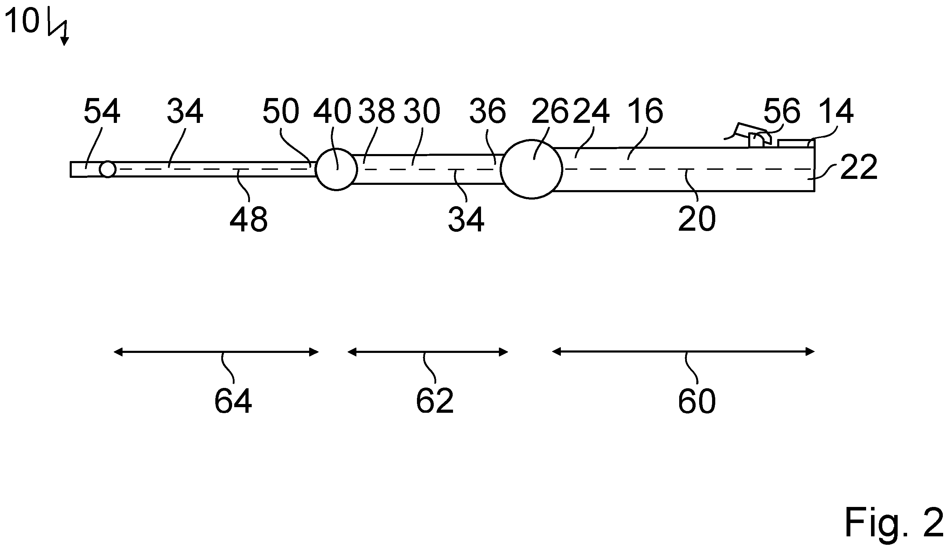

Insbesondere in Fig. 2 sind die Längenverhältnisse der Auskragglieder 16, 30, 44 ersichtlich. Das erste Auskragglied 16 weist eine erste Länge 60 auf, welche sich aus der Distanz zwischen der Abstützung 14 und dem ersten Drehgelenk 26 bemisst. Das zweite Auskragglied 30 weist eine zweite Länge 62 auf, welche sich aus der Distanz zwischen dem ersten Drehgelenk 26 und den zweiten Drehgelenk 40 bemisst. Das dritte Auskragglied 44 weist eine dritte Länge 64 auf, welche sich aus der Distanz zwischen dem zweiten Drehgelenk 40 und dem Anschlussabschnitt 54 bemisst. Das erste Auskragglied 16, das zweite Auskragglied 30 und das dritte Auskragglied 44 sind derart ausgebildet, dass die erste Länge 60 des ersten Auskragglieds 16 jeweils größer als die zweite Länge 62 des zweiten Auskragglieds 30 und die dritte Länge 64 des dritten Auskragglieds 44 ist, dass die dritte Länge 64 des dritten Auskragglied 44 größer als die zweite Länge 62 des zweiten Auskragglied 30 ist und dass die Summe der zweiten Länge 62 und der dritten Länge 64 größer als die erste Länge 60 ist.

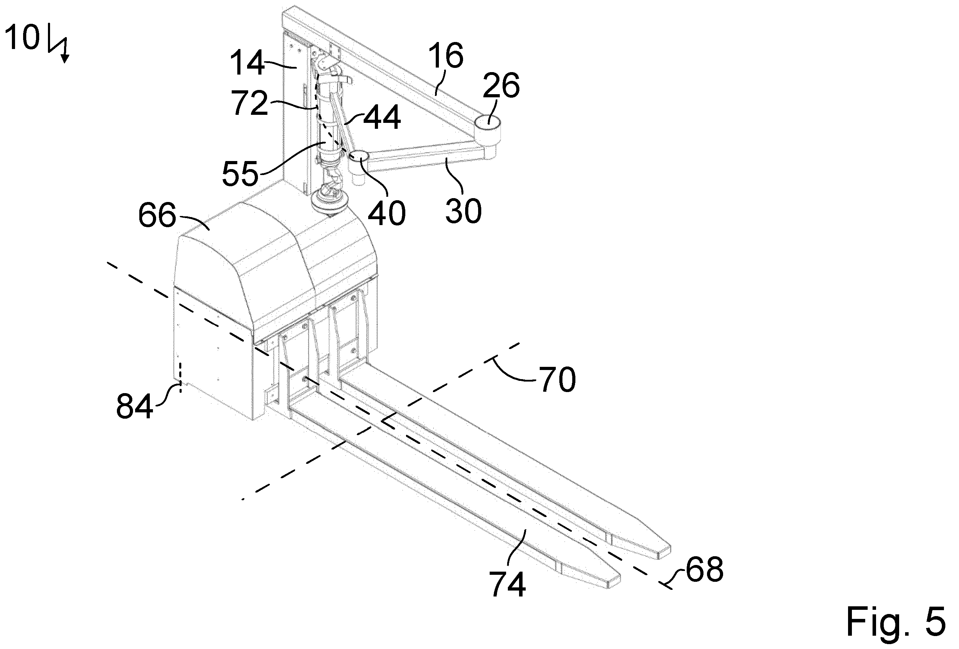

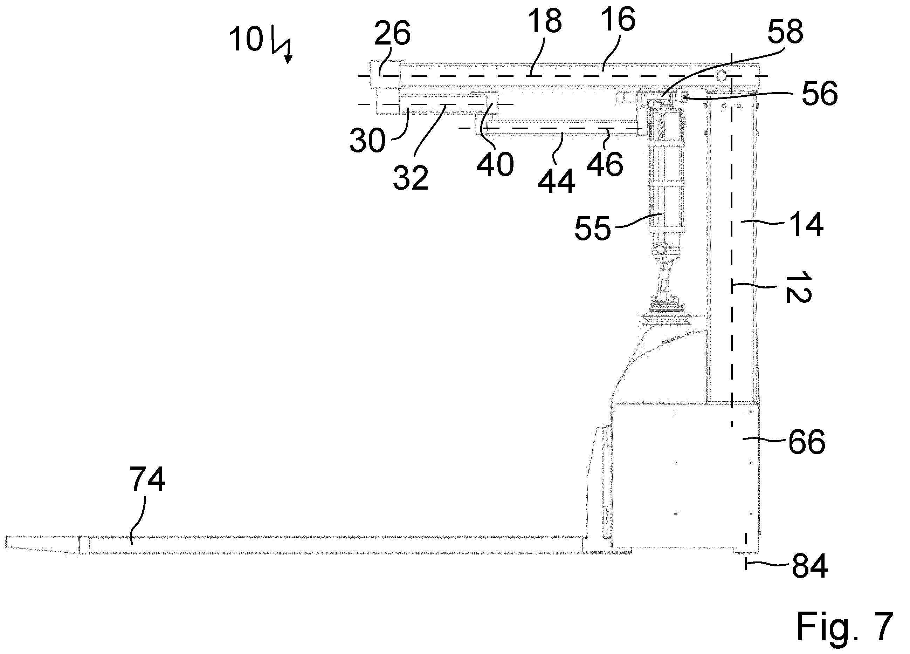

An dem ersten Auskragglied 16 ist eine Verriegelungseinrichtung 56 vorgesehen. Das dritte Auskragglied 44 weist einen Verriegelungsabschnitt 58 auf, welcher am hinteren zweiten Endabschnitt 52 des dritten Auskragglieds 44 angeordnet und der Verriegelungseinrichtung 56 zugeordnet ist. Die Verriegelungseinrichtung 56 und der Verriegelungsabschnitt 58 sind derart aufeinander abgestimmt ausgebildet und derart angeordnet, dass der Verriegelungsabschnitt 58 in der Verriegelungseinrichtung 56 festsetzbar ist und dadurch eine eindeutig definierte Ruhekonfiguration für das zweite Auskragglied 30 und das dritte Auskragglied 44 vorgegeben werden kann. Eine derartige Ruhekonfiguration zeigen die Fig. 5, 6 und 7.

Der Anschlussabschnitt 54 und der Verriegelungsabschnitt 58 sind entlang der Stützachse 12 nach oben versetzt. Demnach kann sichergestellt werden, dass eine anzukoppelnde Hebe- und/oder Greifvorrichtung 55 möglichst weit oben angeordnet ist und z.B. in einer zusammengezogenen Konfiguration nicht zu tief hängt. Der Anschlussabschnitt 54 ist über der zweiten Auskragebene 32 und unter der ersten Auskragebene 46 vorgesehen. Der Verriegelungsabschnitt 58 ist in der zweiten Auskragebene 32 vorgesehen. Da die dritte Länge 64 größer als die zweite Länge 62 ist, kann das dritte Auskragglied trotz des nach oben versetzten Anschlussabschnitts 54 und des nach oben versetzten Verriegelungsabschnitts 58 unter das zweite Auskragglied 30 verschwenkt werden. Zudem ist die Verriegelungseinrichtung 56 ebenfalls in der zweiten Auskragebene 32 angeordnet, sodass der Verriegelungsabschnitt 58 in der Verriegelungseinrichtung 56 festgesetzt werden kann.

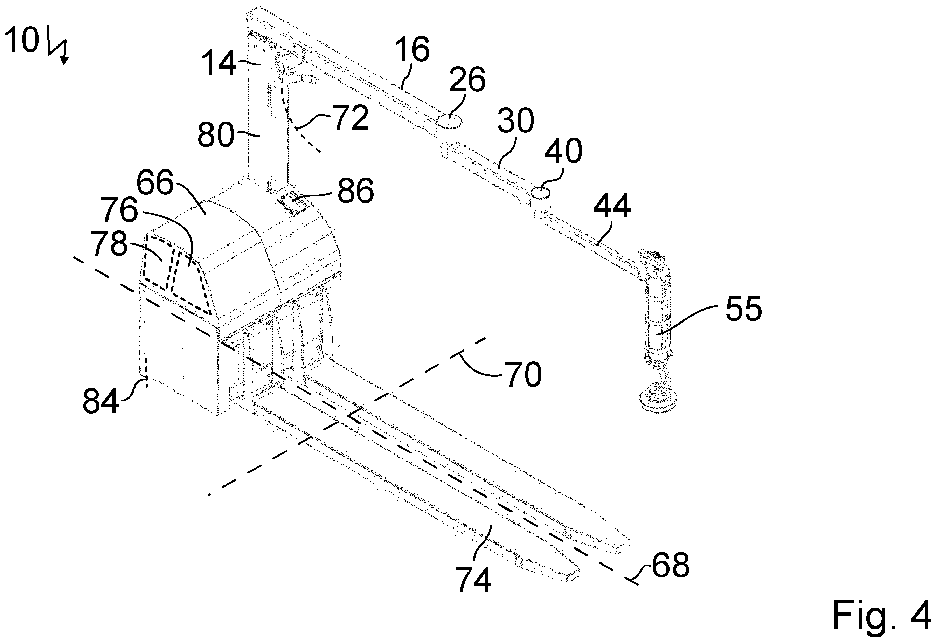

In den Fig. 4 bis 8 ist eine weitere Ausführungsform einer erfindungsgemäßen Handhabungsvorrichtung 10 gezeigt, welche ferner ein Basisgehäuse 66 umfasst. Das Basisgehäuse 66 weist eine parallel zur ersten Auskragrichtung 20 verlaufende Mittellängsachse 68 und eine orthogonal zur Mittellängsachse 66 und parallel zur ersten Auskragebene 18 verlaufende Querachse 70 auf. Die Abstützung 14 ist außermittig bezüglich der Mittellängsachse 66 an dem Basisgehäuse dreh- und verschiebefest angeordnet.

Die Verriegelungseinrichtung 56 ist an einer der Mittellängsachse 68 zugewandten Seite des ersten Auskragglied 16 angeordnet. Die Verriegelungseinrichtung 56 und der Verriegelungsabschnitt 58 sind derart eingerichtet, dass der Verriegelungsabschnitt 58 nur entlang einer von der Mittellängsachse 68 kommenden Bewegungsbahn 72 in die Verriegelungseinrichtung 56 festsetzbar ist.

Zum Festsetzen des Verriegelungsabschnitts 58 in die Verriegelungseinrichtung 56 ist sowohl das zweite Auskragglied 30 als auch das dritte Auskragglied 44 aus der Längskonfiguration, welche insbesondere in Fig. 4 ersichtlich ist, im Uhrzeigersinn zu verschwenken, sodass eine Anordnung der Auskragglieder 30, 44 gemäß der Ruhekonfiguration, welche in den Figuren 5, 6, 7 zu sehen ist, erzielt wird. Dabei erstreckt sich das zweite Auskragglied 30 von dem ersten Drehgelenk 26 weg, schräg zur Mittellängsachse 68, so dass an dem ersten Drehgelenk ein zum Basisgehäuse 66 hin offener, spitzer Winkel von dem ersten Auskragglied 16 und dem zweiten Auskragglied 30 eingeschlossen wird.

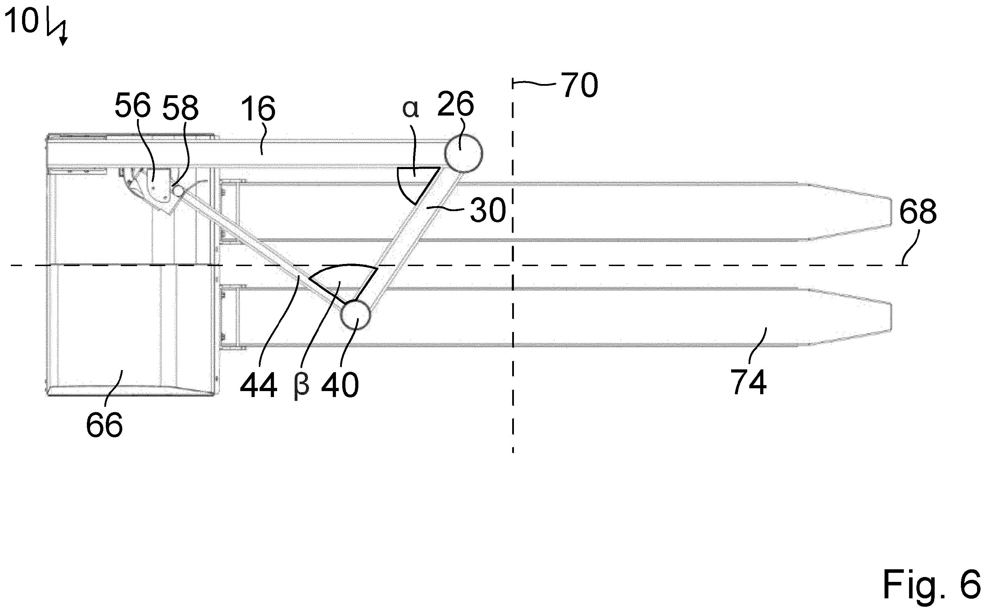

Als allgemein vorteilhafter Aspekt liegen in der Ruhekonfiguration das erste Drehgelenk 26 und das zweite Drehgelenk 40 auf verschiedenen Seiten der Mittellängsachse 68 (vgl. Figur 6). Der Ausleger wird insofern platzsparend zusammengefaltet und nutzt den durch die außermittige Anordnung der Abstützung 14 vorgesehen Raum aus.

Das dritte Auskragglied 44 ist dabei entlang der Querachse 70 zwischen dem zweiten Drehgelenk 40 und der Abstützung 14 angeordnet. Aufgrund der drehfesten Anordnung des ersten Auskragglied 16 und der Längen 60, 62, 64 der Auskragglieder 16, 30, 44 schließen die Auskragglieder 30, 44 in der Draufsicht jeweils miteinander einen definierten Winkel ein, wobei das erste Auskragglied 16 und das zweite Auskragglied 30 einen spitzen Winkel einschließen und wobei das zweite Auskragglied 30 und das dritte Auskragglied 44 einen stumpfen Winkel einschließen. Somit weisen die Auskragglieder 30, 44 eine kompakte Ausdehnung in lateraler Richtung auf. So kann gewährleistet werden, dass die Handhabungsvorrichtung 10 keine seitlich überstehende Störkontur aufweist, wenn sich die Handhabungsvorrichtung 10 in der Ruhekonfiguration befindet.

Am Basisgehäuse 66 sind zwei Zinkenaufnahmen 74 zur Aufnahme jeweils einer Zinke einer Gabel eines Flurförderfahrzeugs vorgesehen. Das Basisgehäuse 66 und die Zinkenaufnahmen 74 sind derart ausgebildet, dass die Handhabungsvorrichtung 10 mit einem Flurförderfahrzeug unterfahrbar ist und jeweils eine Zinke in die Zinkenaufnahme 74 einführbar ist. Dazu weist das Basisgehäuse 66 eine im Bereich des Bodens vorgesehene Ausnehmung 73 auf, welche wenigstens der Breite der Gabel eines Flurförderfahrzeugs entspricht. Auf die Zinkenaufnahmen 74 können handelsübliche Paletten platziert werden, welche beim Transport der Handhabungsvorrichtung 10 ebenfalls transportiert werden.

Zur Bereitstellung von Energie für die Handhabungsvorrichtung 10 ist im Basisgehäuse 66 eine Energiequelle 76 vorgesehen, welche als wiederaufladbare und austauschbare Trogbatterie ausgebildet ist. Die Energiequelle 76 kann einfach in das Basisgehäuse 66 eingeschoben werden oder aus dem Basisgehäuse 66 entnommen werden. Ferner ist in dem Basisgehäuse 66 eine Unterdruckpumpe 78 untergebracht. Die Abstützung 40, das erste Auskragglied 16, das zweite Auskragglied 30 und das dritte Auskragglied 44 sind als Hohlprofile ausgebildet, wobei die innenliegenden Hohlräume 79 der Hohlprofile Kanäle zur Förderung von Medien und Daten zwischen der Unterdruckpumpe 78 und dem Anschlussabschnitt 54 bilden. Das so gebildete innenliegende Druckführungssystem 80 kann zum Betreiben einer unterdruckbetriebenen Hebe- und/oder Greifvorrichtung 55 genutzt werden.

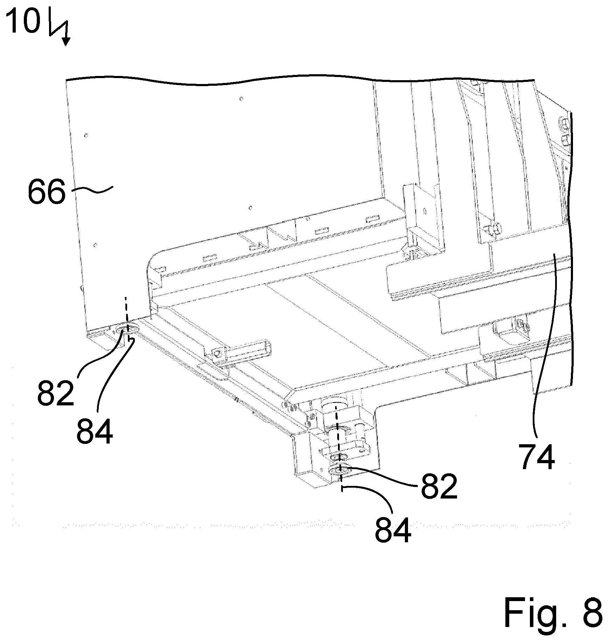

Wie insbesondere in Fig. 8 ersichtlich ist, sind am Basisgehäuse 66 zwei Stützfüße 82 vorgesehen. Die Stützfüße 82 sind jeweils entlang einer Feststellachse 84 in eine untere Stützposition und eine obere Löseposition verfahrbar. Die Feststellachse 84 verläuft parallel zur Stützachse 12. Die in Fig. 8 gezeigte Stellung zeigt die Stützfüße 82 in der Löseposition, wobei die Stützfüße 82 nicht den Boden berühren. In der Löseposition kann die Handhabungsvorrichtung 10 z.B. mittels eines Flurförderfahrzeugs verfahren werden. In der unteren Stützposition steht die Handhabungsvorrichtung 10 auf den Stützfüßen 82, sodass die an der Handhabungsvorrichtung 10 angreifende Last über die Stützfüße 82 in den Boden geleitet wird. Die Stützposition gewährleistet einen stabilen Stand der Handhabungsvorrichtung 10 auf dem Boden. Es ist eine Steuerung 86 im Basisgehäuse 66 vorgesehen, welche derart eingerichtet ist, dass die Stützfüße 82 in die untere Stützposition verfahren, wenn der Verriegelungsabschnitt 58 aus der Verriegelungseinrichtung 56 gelöst wird und dass die Stützfüße 82 in die obere Löseposition verfahren, wenn der Verriegelungsabschnitt 58 in der Verriegelungseinrichtung 56 festgesetzt wird.

## Patentansprüche

1. Handhabungsvorrichtung (10) mit einer sich entlang einer senkrechten Stützachse (12) erstreckenden Abstützung (14),
mit einem dreh- und verschiebefest an der Abstützung (14) angeordneten, sich in einer ersten Auskragebene (18) quer zur Abstützung (14) entlang einer ersten Auskragrichtung (20) erstreckenden, ersten Auskragglied (16),
mit einem zweiten Auskragglied (30), welches über ein erstes Gelenk (26) mit dem ersten Auskragglied (30) derart verbunden ist, dass das zweite Auskragglied (30) in einer zweiten Auskragebene (32) schwenkbar ist,
mit einem dritten Auskragglied (44), welches über ein zweites Gelenk (40) mit dem zweiten Auskragglied (30) derart verbunden ist, dass das dritte Auskragglied (44) in einer dritten Auskragebene (46) schwenkbar ist,
wobei an dem dritten Auskragglied (44) ein Anschlussabschnitt (54) zur Ankopplung einer Hebe- und/oder Greifvorrichtung (55) vorgesehen ist,
wobei entlang der Stützachse (12) die erste Auskragebene (18) über der zweiten Auskragebene (32) liegt und die zweite Auskragebene (32) über der dritten Auskragebene (46) liegt,
wobei das zweite Auskragglied (30) unter dem ersten Auskragglied (16) durchschwenkbar ist und das dritte Auskragglied (44) unter dem zweiten Auskragglied (30) und dem ersten Auskragglied (16) durchschwenkbar ist, **dadurch gekennzeichnet, dass** die Abstützung (14) als sich entlang der Stützachse (12) erstreckende Säule ausgebildet ist.

2. Handhabungsvorrichtung (10) nach Anspruch 1, wobei an der Abstützung (14) und/oder dem ersten Auskragglied (16) eine Verriegelungseinrichtung (56) vorgesehen ist,
wobei das dritte Auskragglied (44) einen Verriegelungsabschnitt (58) aufweist,
wobei die Verriegelungseinrichtung (56) und der Verriegelungsabschnitt (58) derart aufeinander abgestimmt ausgebildet sind, dass der Verriegelungsabschnitt (58) in der Verriegelungseinrichtung (56) festsetzbar ist und dadurch eine definierte Ruhekonfiguration für das zweite Auskragglied (30) und das dritte Auskragglied (44) vorgegeben ist.

3. Handhabungsvorrichtung (10) nach Anspruch 2, wobei der Anschlussabschnitt (54) und/oder der Verriegelungsabschnitt (58) an einem Endabschnitt (52) des dritten Auskragglieds (44) angeordnet ist.

4. Handhabungsvorrichtung (10) nach einem der vorhergehenden Ansprüche, wobei die Summe der zweiten Länge (62) des zweiten Auskragglieds (30) und der dritten Länge (64) des dritten Auskragglieds (44) größer ist, als die erste Länge (60) des ersten Auskragglieds (16) und wobei in der Ruhekonfiguration das zweite Gelenk (40) lateral neben der ersten Auskragrichtung (20) liegt.

5. Handhabungsvorrichtung (10) nach einem der vorhergehenden Ansprüche, wobei in der ersten Auskragrichtung (20) das erste Auskragglied (16) jeweils länger als das zweite Auskragglied (30) und/oder das dritte Auskragglied (44) ausgebildet ist, und wobei das dritte Auskragglied (44) länger als das zweite Auskragglied (30) ausgebildet ist.

6. Handhabungsvorrichtung (10) nach einem der Ansprüche 2 bis 5, wobei der Anschlussabschnitt (54) und/oder der Verriegelungsabschnitt (58) des dritten Auskragglieds (44) entlang der Stützachse (12) nach oben versetzt ist, wobei ein Abstand (64) zwischen dem zweiten Gelenk (40) und dem Anschlussabschnitt (54) und/oder dem Verriegelungsabschnitt (58) größer oder gleich der zweiten Länge (62) des zweiten Auskragglieds (30) ist.

7. Handhabungsvorrichtung (10) nach einem der vorhergehenden Ansprüche, wobei die Abstützung (14) als sich entlang der Stützachse (12) erstreckende höhenverstellbare und insbesondere teleskopierbare Säule ausgebildet ist.

8. Handhabungsvorrichtung (10) nach einem der vorhergehenden Ansprüche, umfassend ein Basisgehäuse (66) mit einer parallel zur ersten Auskragrichtung (20) verlaufenden Mittellängsachse (68) und einer orthogonal zur Mittellängsachse (68) und parallel zur ersten Auskragebene (18) verlaufenden Querachse (70), wobei die Abstützung (14) außermittig bezüglich der Mittellängsachse (68) an dem Basisgehäuse (66) angeordnet ist.

9. Handhabungsvorrichtung (10) nach Anspruch 8 bei Rückbezug auf einen der Ansprüche 2 bis 7, wobei die Verriegelungseinrichtung (56) an einer der Mittellängsachse (68) zugewandten Seite der Abstützung (14) und/oder des ersten Auskragglieds (16) angeordnet ist.

10. Handhabungsvorrichtung (10) nach Anspruch 8 bei Rückbezug auf einen der Ansprüche 2 bis 7 oder nach Anspruch 9, wobei die Verriegelungseinrichtung (56) derart ausgebildet ist, dass der Verriegelungsabschnitt (58) entlang einer von der Mittellängsachse (68) kommenden Bewegungsbahn (72) in die Verriegelungseinrichtung (56) festsetzbar ist.

11. Handhabungsvorrichtung (10) nach einem der Ansprüche 8 bis 10, wobei das Basisgehäuse (66) wenigstens eine Zinkenaufnahme (74) für eine Zinke einer Gabel eines Flurförderfahrzeugs aufweist, so dass das Basisgehäuse (66) mit dem Flurförderfahrzeug unterfahrbar ist und der Zinken in die Zinkenaufnahme (74) einführbar ist.

12. Handhabungsvorrichtung (10) nach einem der Ansprüche 8 bis 11, wobei im Basisgehäuse (66) eine Energiequelle (76) vorgesehen ist, welche insbesondere als austauschbare und/oder wiederaufladbare Trogbatterie ausgebildet ist.

13. Handhabungsvorrichtung (10) nach einem der Ansprüche 8 bis 12, wobei im Basisgehäuse eine Unterdruckpumpe (78) vorgesehen ist, und wobei die Abstützung (14), das erste Auskragglied (16), das zweite Auskragglied (30) und/oder das dritte Auskragglied (44) Kanäle (79) zur Förderung von Medien und/oder Daten zwischen der Unterdruckpumpe (78) und dem Anschlussabschnitt (54) aufweisen.

14. Handhabungsvorrichtung (10) nach einem der Ansprüche 8 bis 13, wobei am Basisgehäuse (66) wenigstens ein Stützfuß (82) vorgesehen ist, welcher parallel zur Stützachse (12) in eine untere Stützposition und in eine oberen Löseposition einstellbar ist.

15. Handhabungsvorrichtung (10) nach Anspruch 14, wobei der wenigstens eine Stützfuß (82) derart eingerichtet ist, dass dieser in die Löseposition verfährt, wenn der Verriegelungsabschnitt (58) in der Verriegelungseinrichtung (56) festgesetzt wird, und wobei der wenigstens eine Stützfuß (82) derart eingerichtet ist, dass dieser in die Stützposition verfährt, wenn der Verriegelungsabschnitt (58) aus der Verriegelungseinrichtung (56) gelöst wird.

16. Handhabungsvorrichtung (10) nach einem der vorhergehenden Ansprüche, umfassend eine Hebe- und/oder Greifvorrichtung (55), welche am Anschlussabschnitt (54) des dritten Auskragglieds (44) angekoppelt ist.

## Claims

1. Handling device (10), comprising a support (14) that extends along a vertical support axis (12),
comprising a first projection element (16) which is rotationally fixedly and non-movably arranged on the support (14) and extends in a first projection plane (18) transversely to the support (14) in a first projection direction (20),
comprising a second projection element (30) which is connected to the first projection element (30) via a first joint (26) such that the second projection element (30) is pivotable in a second projection plane (32),
comprising a third projection element (44) which is connected to the second projection element (30) via a second joint (40) such that the third projection element (44) is pivotable in a third projection plane (46),
an attachment portion (54) for coupling a lifting and/or gripping device (55) being provided on the third projection element (44),
along the support axis (12), the first projection plane (18) overlying the second projection plane (32) and the second projection plane (32) overlying the third projection plane (46),
the second projection element (30) being pivotable under the first projection element (16) and the third projection element (44) being pivotable under the second projection element (30) and the first projection element (16), **characterized in that** the support (14) is designed as a column extending along the support axis (12).

2. Handling device (10) according to claim 1, wherein a locking apparatus (56) is provided on the support (14) and/or the first projection element (16),
wherein the third projection element (44) has a locking portion (58),
wherein the locking apparatus (56) and the locking portion (58) are designed to be coordinated with one another such that the locking portion (58) can be fixed in the locking apparatus (56), as a result of which a defined idle configuration for the second projection element (30) and the third projection element (44) is specified.

3. Handling device (10) according to claim 2, wherein the attachment portion (54) and/or the locking portion (58) is arranged on an end portion (52) of the third projection element (44).

4. Handling device (10) according to any of the preceding claims, wherein the sum of the second length (62) of the second projection element (30) and the third length (64) of the third projection element (44) is greater than the first length (60) of the first projection element (16) and wherein, in the idle configuration, the second joint (40) is laterally adjacent to the first projection direction (20).

5. Handling device (10) according to any of the preceding claims, wherein, in the first projection direction (20), the first projection element (16) is longer than the second projection element (30) and/or the third projection element (44), and wherein the third projection element (44) is longer than the second projection element (30).

6. Handling device (10) according to any of claims 2 to 5, wherein the attachment portion (54) and/or the locking portion (58) of the third projection element (44) is offset upward along the support axis (12), wherein a distance (64) between the second joint (40) and the attachment portion (54) and/or the locking portion (58) is greater than or equal to the second length (62) of the second projection element (30).

7. Handling device (10) according to any of the preceding claims, wherein the support (14) is designed as a height-adjustable and in particular telescopic column which extends along the support axis (12).

8. Handling device (10) according to any of the preceding claims, comprising a base housing (66) having a central longitudinal axis (68) that extends parallel to the first projection direction (20), and a transverse axis (70) that extends orthogonally to the central longitudinal axis (68) and parallel to the first projection plane (18), wherein the support (14) is arranged eccentrically with respect to the central longitudinal axis (68) on the base housing (66).

9. Handling device (10) according to claim 8, with reference to any of claims 2 to 7, wherein the locking apparatus (56) is arranged on a side of the support (14) and/or of the first projection element (16), which side faces the central longitudinal axis (68).

10. Handling device (10) according to claim 8, with reference to any of claims 2 to 7, or according to claim 9, wherein the locking apparatus (56) is designed such that the locking portion (58) can be fixed in the locking apparatus (56) along a movement path (72) originating from the central longitudinal axis (68).

11. Handling device (10) according to any of claims 8 to 10, wherein the base housing (66) has at least one tine receptacle (74) for a tine of a fork of an industrial truck, so that the industrial truck can drive under the base housing (66) and the tines can be inserted into the tine receptacle (74).

12. Handling device (10) according to any of claims 8 to 11, wherein an energy source (76) is provided in the base housing (66), which energy source is designed in particular as a replaceable and/or rechargeable trough battery.

13. Handling device (10) according to any of claims 8 to 12, wherein a vacuum pump (78) is provided in the base housing, and wherein the support (14), the first projection element (16), the second projection element (30), and/or the third projection element (44) have channels (79) for conveying media and/or data between the vacuum pump (78) and the attachment portion (54).

14. Handling device (10) according to any of claims 8 to 13, wherein at least one support foot (82) is provided at the base housing (66), which support foot can be adjusted parallel to the support axis (12) into a lower support position and into an upper release position.

15. Handling device (10) according to claim 14, wherein the at least one support foot (82) is designed such that it moves into the release position when the locking portion (58) is fixed in the locking apparatus (56), and wherein the at least one support foot (82) is designed such that it moves into the support position when the locking portion (58) is released from the locking apparatus (56).

16. Handling device (10) according to any of the preceding claims, comprising a lifting and/or gripping device (55) which is coupled to the attachment portion (54) of the third projection element (44).

## Revendications

1. Dispositif de manipulation (10) comportant un support (14) s'étendant le long d'un axe de support (12) vertical,
comportant un premier élément en saillie (16) disposé de manière fixe en rotation et en coulissement sur le support (14) et s'étendant dans un premier plan de saillie (18) transversalement au support (14) le long d'une première direction de saillie (20),
comportant un deuxième élément en saillie (30) qui est relié au premier élément en saillie (30) par l'intermédiaire d'une première articulation (26) de telle sorte que le deuxième élément en saillie (30) peut pivoter dans un deuxième plan de saillie (32),
comportant un troisième élément en saillie (44) qui est relié au deuxième élément en saillie (30) par l'intermédiaire d'une seconde articulation (40) de telle sorte que le troisième élément en saillie (44) peut pivoter dans un troisième plan de saillie (46),
dans lequel une section de raccordement (54) pour l'accouplement d'un dispositif de levage et/ou de préhension (55) est prévue sur le troisième élément en saillie (44),
dans lequel, le long de l'axe de support (12), le premier plan de saillie (18) est situé au-dessus du deuxième plan de saillie (32) et le deuxième plan de saillie (32) est situé au-dessus du troisième plan de saillie (46),
dans lequel le deuxième élément en saillie (30) peut pivoter sous le premier élément en saillie (16) et le troisième élément en saillie (44) peut pivoter sous le deuxième élément en saillie (30) et le premier élément en saillie (16),
**caractérisé en ce que**
le support (14) est conçu comme une colonne s'étendant le long de l'axe de support (12).

2. Dispositif de manipulation (10) selon la revendication 1, dans lequel un appareil de verrouillage (56) est prévu sur le support (14) et/ou sur le premier élément en saillie (16),
dans lequel le troisième élément en saillie (44) présente une section de verrouillage (58),
dans lequel l'appareil de verrouillage (56) et la section de verrouillage (58) sont conçus de manière à être adaptés l'un à l'autre de telle sorte que la section de verrouillage (58) peut être fixée dans l'appareil de verrouillage (56) et qu'ainsi, une configuration de repos définie est prédéfinie pour le deuxième élément en saillie (30) et le troisième élément en saillie (44).

3. Dispositif de manipulation (10) selon la revendication 2, dans lequel la section de raccordement (54) et/ou la section de verrouillage (58) sont disposées sur une section d'extrémité (52) du troisième élément en saillie (44).

4. Dispositif de manipulation (10) selon l'une des revendications précédentes, dans lequel la somme de la deuxième longueur (62) du deuxième élément en saillie (30) et de la troisième longueur (64) du troisième élément en saillie (44) est supérieure à la première longueur (60) du premier élément en saillie (16), et dans lequel, dans la configuration de repos, la seconde articulation (40) est latéralement adjacente à la première direction de saillie (20).

5. Dispositif de manipulation (10) selon l'une des revendications précédentes, dans lequel, dans la première direction de saillie (20), le premier élément en saillie (16) est conçu de manière à être respectivement plus long que le deuxième élément en saillie (30) et/ou que le troisième élément en saillie (44), et dans lequel le troisième élément en saillie (44) est conçu de manière à être plus long que le deuxième élément en saillie (30).

6. Dispositif de manipulation (10) selon l'une des revendications 2 à 5, dans lequel la section de raccordement (54) et/ou la section de verrouillage (58) du troisième élément en saillie (44) sont décalées vers le haut le long de l'axe de support (12), dans lequel une distance (64) entre la seconde articulation (40) et la section de raccordement (54) et/ou la section de verrouillage (58) est supérieure ou égale à la deuxième longueur (62) du deuxième élément en saillie (30).

7. Dispositif de manipulation (10) selon l'une des revendications précédentes, dans lequel le support (14) est conçu sous la forme d'une colonne réglable en hauteur, et en particulier télescopique, s'étendant le long de l'axe de support (12).

8. Dispositif de manipulation (10) selon l'une des revendications précédentes, comprenant un boîtier de base (66) comportant un axe longitudinal médian (68) s'étendant parallèlement à la première direction de saillie (20) et un axe transversal (70) s'étendant orthogonalement à l'axe longitudinal médian (68) et parallèlement au premier plan de saillie (18), dans lequel le support (14) est excentré par rapport à l'axe longitudinal médian (68) sur le boîtier de base (66).

9. Dispositif de manipulation (10) selon la revendication 8 en référence à l'une des revendications 2 à 7, dans lequel l'appareil de verrouillage (56) est disposé sur un côté du support (14) et/ou du premier élément en saillie (16) orienté vers l'axe longitudinal médian (68).

10. Dispositif de manipulation (10) selon la revendication 8 en référence à l'une des revendications 2 à 7 ou selon la revendication 9, dans lequel l'appareil de verrouillage (56) est conçu de telle sorte que la section de verrouillage (58) peut être fixée dans l'appareil de verrouillage (56) le long d'une trajectoire de déplacement (72) partant de l'axe longitudinal médian (68).

11. Dispositif de manipulation (10) selon l'une des revendications 8 à 10, dans lequel le boîtier de base (66) présente au moins un logement pour dent (74) pour une dent d'une fourche d'un chariot de manutention, de sorte que le boîtier de base (66) peut être amené sous le chariot de manutention et que la dent peut être introduite dans le logement pour dent (74).

12. Dispositif de manipulation (10) selon l'une des revendications 8 à 11, dans lequel est prévue dans le boîtier de base (66) une source d'énergie (76) qui est conçue en particulier sous la forme d'une batterie à auge remplaçable et/ou rechargeable.

13. Dispositif de manipulation (10) selon l'une des revendications 8 à 12, dans lequel une pompe à dépression (78) est prévue dans le boîtier de base, et dans lequel le support (14), le premier élément en saillie (16), le deuxième élément en saillie (30) et/ou le troisième élément en saillie (44) présentent des canaux (79) pour le transport de fluides et/ou de données entre la pompe à dépression (78) et la section de raccordement (54).

14. Dispositif de manipulation (10) selon l'une des revendications 8 à 13, dans lequel est prévu sur le boîtier de base (66) au moins un pied de support (82) qui est réglable parallèlement à l'axe de support (12) dans une position inférieure de support et dans une position supérieure de dégagement.

15. Dispositif de manipulation (10) selon la revendication 14, dans lequel l'au moins un pied de support (82) est conçu de telle sorte qu'il se déplace vers la position de dégagement lorsque la section de verrouillage (58) est fixée dans l'appareil de verrouillage (56), et dans lequel l'au moins un pied de support (82) est conçu de telle sorte qu'il se déplace vers la position de support lorsque la section de verrouillage (58) est dégagée de l'appareil de verrouillage (56).

16. Dispositif de manipulation (10) selon l'une des revendications précédentes, comprenant un dispositif de levage et/ou de préhension (55) qui est accouplé à la section de raccordement (54) du troisième élément en saillie (44).
